# EUROPÄISCHE PATENTANMELDUNG

(11) **EP 4 030 656 A1**
(43) Veröffentlichungstag der Anmeldung: **20.07.2022**
(21) Anmeldenummer: 21151689.3
(22) Anmeldetag: 14.01.2021
(51) Int. Cl.: H04L 1/00, H04L 1/18

(54) **KOMMUNIKATIONSNETZWERK**

(71) Anmelder: Fraunhofer-Gesellschaft zur Förderung der angewandten Forschung e.V., 80686 München (DE)
(72) Erfinder: Neuhaus, Priyanka, 01069 Dresden (DE); Frotzscher, Andreas, 01069 Dresden (DE); Lipp, Stefan, 91058 Erlangen (DE); Hupp, Jürgen, 91058 Erlangen (DE); Windisch, Thomas, 91058 Erlangen (DE); Ellinger, Hannes, 91058 Erlangen (DE); Burkhardt, Frank, 91058 Erlangen (DE)
(74) Vertreter: Pfitzner, Hannes

(57) **Zusammenfassung**

Kommunikationsnetzwerk mit folgenden Merkmalen: einer Basisstation; mehreren Knoten umfassend zumindest einen ersten und einen zweiten Knoten, wobei ein oder mehrere Knoten als Relayknoten zwischen der Basisstation und einem der mehreren Knoten oder zwischen zwei der mehreren Knoten einsetzbar sind, wobei für die Übermittlung von Basisstation an den ersten Knoten oder von dem ersten Knoten an die Basisstation ein Superframe verwendet wird, wobei das Superframe einen ersten und einen zweiten Bereich aufweist, wobei der erste Bereich zur Übertragung von einem oder mehreren Datenpaketen oder zur Übertragung von einem oder mehreren Datenpaketen im Downlink- oder zur Übertragung von einem oder mehreren Datenpaketen im Uplinkpaket dient und wobei der zweite Bereich zur Wiederholübertragung oder Weiterleitungsübertragung dient.

## Beschreibung

### Technisches Feld

Ausführungsbeispiele der vorliegenden Erfindung beziehen sich auf ein Kommunikationsnetzwerk sowie ein Verfahren zum Betreiben eines Kommunikationsnetzwerks. Bevorzugte Ausführungsbeispiele beziehen sich auf ein Konzept zum kooperativen Weiterleiten (Cooperative Relaying) innerhalb eines Kommunikationsnetzwerks. Weitere Ausführungsbeispiele beziehen sich auf ein Konzept zum kooperativen Weiterleiten mit einem Überlastmodus. Im Generellen werden Verfahren zur Erhöhung der Übertragungssicherheit in echtzeit-kritischen Funkübertragungen mittels räumlicher Diversität geschaffen.

Ein Kommunikationsnetzwerk stellt eine Einrichtung beziehungsweise Infrastruktur für die Ermittlung von Informationen bereit. Hierzu werden Nachrichtenverbindungen zwischen mehreren Endstellen hergestellt, um beispielsweise von einem Endgerät zu einem anderen Endgerät eine entsprechende Nachricht beziehungsweise ein oder mehrere Datenpakete zu übermitteln. Das Übermitteln kann über mehrere Knoten erfolgen. Es sind sowohl drahtgebundene als auch drahtlose Kommunikationsnetzwerke im Einsatz, wobei selbstverständlich auch Mischungen entsprechend vorkommen können.

Als Wireless-LAN bezeichnet man ein lokales Funknetzwerk, das durch die IEEE 802.11 normiert ist. Hier werden unterschiedliche Konzepte, Übertragungsverfahren, Frequenzbereiche, usw. festgelegt.

### Stand der Technik

In der EP 2159976 A1 ist mit Fokus auf WLAN ein Relayknoten beziehungsweise eine Relaymethode offenbart. Hierbei wird ein separates Relay verwendet, das Daten von einer Endstelle zu einer anderen Endstelle, z. B. von einer Basisstation zu einem Knoten oder von einem ersten Knoten zu einem zweiten Knoten, übermittelt. Dazu wertet es das Feedback von der Empfängerstation aus und entscheidet ausgehend hiervon, welches Paket weitergeleitet werden soll.

Bei einem 3GPP Meeting wurde eine Perfomanceanalyse sowie Downlink-Uplink-Übertragungsschema für Typ-II Relays erläutert. Hierbei soll das Relaying transparent für die UEs sein, wobei unterschiedliche Relayalternativen offenbart sind. Eine Downlink-Relay-Alternative kann sich wie folgt gestalten:
UE leitet CQI/CSI Informationen an eNB weiter. Eine Simultanübertragung der DL Daten von eNB und Relay Node zum UE erfolgt. Bei NACK von UE wird eine Retransmission gescheduled, die dann auch simultan von eNB und RN durchgeführt wird. Entsprechend einer Option 2, können DL Daten von eNB an UE von der RN mitgehört werden. Die RN empfängt auch ACK/NACK-Daten von UE Bei NACK wird eine Retransmission gescheduled, die dann auch simultan von eNB und RN durchgeführt wird. In einem sogenannten UE Relaymodus sendet die eNB an das UE Infos über zugewiesene UL Slots (UL Grant schedule), die auch der RN empfängt. Das UE sendet UL Paket, eNB und RN versuchen das Paket zu empfangen. Hierdurch entstehen drei Optionen:
- Option 1: RN empfängt UL Paket und leitet es in kürzester Zeit an eNB weiter (< 4ms).
- Option 2: UL Ressourcen für RN Paket forwarding werden vorallokiert. RN sendet Info an eNB, ob UL Paket korrekt empfangen werden konnte.
- Option 3: RN forwards UL Packet immer, mit Ausnahme es empfängt ein ACK von der eNB.

Die US 2010/0990352 beschreibt eine Vorrichtung und ein Verfahren für ein Relaying zwischen einer Basisstation und einer Mobilstation. Das UE kann ein Datenpaket entweder direkt an den eNB oder über ein Service-RN senden. Im Falle eines Fehlers am eNB sucht der eNB in einer Mutual-Cooperation-Liste nach einem RN, der in der Lage ist, das Signal zu übertragen. Wenn ein solches RN gefunden wird, wird ein Retransmission Request entweder nur an das RN oder sowohl an das RN als auch an die UE gesendet. Die Paketwiederholung wird entweder durch das RN geführt oder sowohl durch das RN als auch die UE. Im letzteren Fall wählt eNB das am besten empfangene Signal aus. Wenn die UL-Übertragung über ein Service-RN fehlschlägt, wird die Aufforderung zur erneuten Übertragung an ein anderes RN gesendet.

Die oben erläuterten Ansätze sind nachteilig, da die Steuerung recht aufwändig ist. Beispielsweise wird entweder ein separates (mindestens logisches Interface benötigt) oder der Signaloverhead ist recht hoch beziehungsweise wenig dynamisch.

Eine Veröffentlichung mit dem Titel "Scheduling for Source Relaying With Packet Aggregation in Industrial Wireless Networks" beschreibt ein Verfahren zum "Scheduling" von Relayknoten und Paketapplikationen. Hierbei werden Pakete im Regelfall von dem Relay immer weitergeleitet, unabhängig davon, ob die Übertragung fehlgeschlagen ist. Ferner können bei diesem Konzept auch noch die bestimmten Latenzanforderungen nicht gerecht werden. Deshalb besteht der Bedarf nach einem verbesserten Ansatz.

### Ausführungsbeispiele

Aufgabe der vorliegenden Erfindung ist es, ein Konzept zu schaffen, das einen verbesserten Kompromiss aus robuster Datenübermittlung, Redundanz und Steuerung des Overheads bietet.

Die Aufgabe wird durch den Gegenstand der unabhängigen Patentansprüche gelöst.

### Aspekt Cooperative Relaying

Ausführungsbeispiele der vorliegenden Erfindung schaffen ein Kommunikationsnetzwerk mit zumindest einer Basisstation und mehreren Knoten. Die Knoten umfassen zumindest einen ersten und einen zweiten Knoten, wobei einer der mehreren Knoten, z. B. der erste oder der zweite Knoten, als Relayknoten zwischen der Basisstation und einem der mehreren Knoten oder zwischen zwei der mehreren Knoten einsetzbar ist. Für die Übermittlung von der Basisstation an den ersten Knoten oder von dem ersten Knoten an die Basisstation (Downlink oder Uplink) wird ein Superframe verwendet, wobei das Superframe einen ersten und zweiten Bereich aufweist. Entsprechend Ausführungsbeispielen ist unter ein Superframe eine Zeit-Frequenz-Rahmenstruktur bzw. eine sich wiederholende Zeit-Frequenz-Rahmenstruktur zu verstehen. Diese kann die Übertragung von ein oder mehreren Datenpaketen umfassen, wobei jedes Datenpaket in einem oder einer Mehrzahl von Ressourcenblöcken übertragen wird und die Datenpakete einmal oder mehrmals übertragen werden... Entsprechend bevorzugten Ausführungsbeispielen weist ein Superframe mehrere Frames beziehungsweise Bereiche auf. Beispielsweise weist das Superframe zumindest einen ersten und zweiten Bereich auf. Der erste Bereich wird für die Übertragung von einem oder mehreren Datenpaketen (z. B. im Downlink oder im Uplink) verwendet, wobei der zweite Bereich zur Wiederholübertragung oder Weiterleitungsübertragung dient. Insofern verwendet der Relayknoten ein Superframe und nutzt zur Wiederholübertragung beziehungsweise zur Weiterleitungsübertragung den zweiten Bereich.

Das heißt also, dass entsprechend Ausführungsbeispielen der Relayknoten, hier beispielsweise der zweite Knoten, den Superframe mit einem ersten und/oder einem zweiten Bereich empfängt und ausgebildet ist, um das Datenpaket aus dem ersten Bereich zu extrahieren und das Datenpaket in den zweiten Bereich des Superframes an die Basisstation oder den ersten Knoten zu senden.

Ausführungsbeispielen der vorliegenden Erfindung liegt also die Erkenntnis zugrunde, dass ein Relayknoten ein Superframe für eine sogenannte Paketwiederholphase nutzt. Das Superframe kann mehrere Bereiche aufweisen, wobei zum Beispiel der erste Bereich zum Übermitteln eines Datenpakets verwendet wird. Dieses Datenpaket empfängt der Relayknoten, unabhängig davon, ob es für ihn bestimmt ist oder nicht, und sendet dann in dem zweiten Bereich des Superframes das empfangen Datenpaket erneut aus, um dieses weiterzuleiten bzw. wiederholt zu senden. Hierdurch erhöht sich für den Empfänger die Übermittlungschance, nämlich einerseits dadurch dass es das direkt gesendete Datenpaket in dem ersten Teil des Superframes empfangen oder das wiederholt gesendete Datenpaket in dem zweiten Teil des Superframes empfangen könnte. Entsprechend Ausführungsbeispielen kann das Konzept mit Network Coding oder mit Ressource-Overloading (Ressource können in Ressourcenblöcken organisiert sein und z.B. durch Zeit- und Frequenz-Domäne definiert sein) verwendet werden. Alle drei Varianten erhöhen die Zuverlässigkeit der Übertragung von echtzeit-kritischen Datenpaketen, indem die Erfolgschancen durch Paketwiederholung gesteigert werden. Gleichzeitig können mithilfe der Verfahren die Ressourcenblöcke effizienter genutzt werden, was insbesondere auf die Verfahren "Cooperative Relaying mit Network Coding" und "Cooperative Relaying mit Ressource-Overloading" zutrifft. Somit kann die Länge des Superframes reduziert werden, wodurch sehr kurze Übertragungslatenzen bei gleichzeitig hoher Zuverlässigkeit erreicht werden. In beiden vorgeschlagenen Ansätzen kann die Übertragungslatenz bis zu 25% reduziert werden.

Es sei angemerkt, dass das Wort Superframe allgemein als "Rahmenstruktur" auch beschrieben werden kann, die sowohl ein Zeit- als auch Frequenzkomponente umfasst (Einteilung sowohl in Zeit als auch in Frequenz). Durch die Rahmenstruktur wird Datenübermittelung in dem Netzwerk strukturiert / bestimmt.

Entsprechend Ausführungsbeispielen sind die Basisstation und der erste Knoten (RN Knoten) ausgebildet, eine Information bezüglich eines Übertragungsfehlers, einer erfolgreichen Übertragung (ACK-Signal) oder einer nicht erfolgreichen Übertragung (NACK-Signal) an den zweiten Knoten zu übermitteln. Hierbei kann die Information beziehungsweise das ACK-Signal/ACK-Flag oder das NACK-Signal/NACK-Flag Teil des Superframes oder des vorherigen Superframes sein. Entsprechend Ausführungsbeispielen wird das ACK-Signal oder das NACK-Signal in Paketen in einem ersten Bereich des Superframes mit übertragen. Entsprechend Ausführungsbeispielen ist der zweite Knoten dazu ausgebildet, das ACK-Signal beziehungsweise NACK-Signal beziehungsweise die Information über die erfolgreiche oder nicht erfolgreiche Übertragung zu empfangen, auszuwerten und entsprechend das Relay-Paket in dem zweiten Bereich zu übertragen. Hierbei heißt entsprechend beispielsweise eine Reaktion auf ein empfangenes NACK-Signal vom ersten Knoten führt zu einer Wiederholübertragung im Downlink, NACK-Signal von der Basisstation führt zu einer Wiederholübertragung im Uplink. Wie oben bereits erläutert, können die Uplink und/oder Downlink Wiederholübertragung in dem reservierten Bereich (zweiter Bereich) übertragen werden. Entsprechend weiteren Ausführungsbeispielen erfolgt die Zuordnung des zweiten Bereichs zu zumindest einem von mehreren Relayknoten, z. B. anhand einer Verbindungsqualität des ersten Knotens oder einer Relayverbindungsqualität.

Entsprechend einem Ausführungsbeispiel kann der zweite Knoten das Datenpaket in unveränderter oder in modifizierter Form weiterleiten. Das heißt also, dass entsprechend Ausführungsbeispielen während der Paketwiederholphase ein Relayknoten das fehlerhaft übertragene Paket in ihrer zugeordneten Verbindung nicht in seiner ursprünglichen Form weiterleitet, sondern stattdessen ein abgewandeltes Paket weiterleitet, das über Methoden des Network-Codings aus dem Uplink und dem Downlinkpaket der Verbindung bestimmt wird (siehe oben).

Wenn man also davon ausgeht, dass der zweite Knoten als Relayknoten verwendet wird, ist dieser entsprechend Ausführungsbeispielen dazu ausgebildet, das Downlinkpaket von der Basisstation zu dem ersten Knoten und das Uplinkpaket von dem ersten Knoten zu der Basisstation in einem gemeinsamen Relay-Paket zu verbinden, z.B. mittels Network Coding (s.u.). Entsprechend Ausführungsbeispielen ist dieses Relay-Paket (Datenpaket im zweiten Bereich) ausgebildet, um an zwei Knoten adressiert zu werden. Anders ausgedrückt heißt es, dass der zweite Knoten ausgebildet ist, das Relay-Paket an zwei Knoten zu adressieren. Das heißt also vorteilhafterweise, dass in dem Relay-Paket (dem Datenpaket in dem zweiten Bereich) sowohl Daten aus dem Uplink als auch aus dem Downlink enthalten sind und somit dieses Relay-Paket sowohl zur Übertragung an den ersten Knoten als auch zur Übertragung an die Basisstation genutzt werden kann. Der gesamte Ansatz reduziert die Latenzzeit.

Das heißt also, dass entsprechend Ausführungsbeispielen der zweite Bereich des Superframes, Wiederholübertragung beziehungsweise Weiterleitungsübertragung zwischen Basisstation und dem ersten Knoten oder dem ersten Knoten und der Basisstation (Downlink oder Uplink), reserviert ist. Entsprechend Ausführungsbeispielen kann der zweite Bereich einen ersten reservierten Block und einen zweiten reservierten Block aufweisen, wobei der erste reservierte Block für die Wiederholübertragung oder Weiterleitungsübertragung von einem Downlinkpaket der Basisstation an den ersten Knoten vorgesehen ist und wobei der zweite reservierte Block für die Wiederholübertragung oder Weiterleitungsübertragung eines Uplinkpakets von dem ersten Knoten zu der Basisstation vorgesehen ist. Entsprechend Ausführungsbeispielen erfolgt das Reservieren durch eine Art Ressourcencontroller, z. B. die Basisstation oder eine Steuerung.

### Aspekt Cooperative Relaying mit Ressource-Overloading

Entsprechend einem Ausführungsbeispiel kann das Cooperative Relaying auch mit einem sogenannten Ressource-Overloading erfolgen. Hierbei ist der erste und der zweite Knoten als Paar definiert, wobei der erste Knoten ein Uplinkpaket oder Downlinkpaket des zweiten Knotens weiterleitet und der zweite Knoten ein Uplinkpaket oder ein Downlinkpaket des ersten Knotens weiterleitet.

### Aspekt Cooperative Relaying mit fixed Ressource-Overloading

Hierbei kann beispielsweise mindestens eine Ressource des zweiten Bereichs des Superframes für den zu einem Paar gruppierten ersten und zweiten Knoten reserviert sein. Auch können weitere Paare definiert sein, denen weitere Ressourcen des zweiten Bereiches zugeordnet sind.

Kerngedanke dieser Idee ist es, dass durch die Definition des Paares der erste Knoten als Wiederholpaket ein Paket sendet, das von der Basisstation für den zweiten Knoten bzw. von dem zweiten Knoten für die Basisstation bestimmt ist, während gleichzeitig der zweite Knoten ein Paket sendet, das von der Basisstation für den ersten Knoten bzw. von dem ersten Knoten für die Basisstation bestimmt ist. Wenn man davon ausgeht, dass beide Knoten das an sie gerichtete Datenpaket erfolgreich empfangen haben, kann es dazu kommen, dass die jeweilige Wiederholübertragung sich gegenseitig stört, was allerdings unproblematisch ist, da ja bereits beide erfolgreich ihr entsprechendes Datenpaket empfangen haben. Für den Fall, dass sich nur einer von den zwei Knoten (erster oder zweiter Knoten) im Empfangsbereich zu der Basisstation befindet, kann dann nur dieser das Datenpaket weiterleiten, so dass dann im Endeffekt nur einer der zwei Knoten sendet und der zweite Knoten die Chance hat, das weitergeleitete wiederholt gesendete Paket zu empfangen. Dieser speziellere Ansatz dieses untergeordneten Aspekts ist ebenso wie der Ansatz des Hauptaspekts vorteilhaft, da insgesamt die Zuverlässigkeit gesteigert wird und das ganze System echtzeit-fähig bleibt. Ferner ist auch eine Effizienz beim Datenoverhead erreicht, da nicht zwingend aufwändige Steuerungssignale ausgetauscht beziehungsweise ausgewertet werden müssen.

An dieser Stelle sei angemerkt, dass der erste und der zweite Knoten an jeweils für den anderen Knoten adressiertes Downlinkpaket oder Uplinkpaket in dem zweiten Bereich sendet, wenn ein für den jeweiligen Knoten adressiertes Downlinkpaket und/oder Uplinkpaket korrekt empfangen wurde. Alternativ kann der erste und der zweite Knoten ein jeweils für den anderen Knoten adressiertes Downlinkpaket in dem zweiten Bereich in einen Block für das Downlinkpaket senden, wenn ein für den jeweiligen Knoten adressiertes Downlinkpaket und/oder Uplinkpaket korrekt empfangen wurde, und/oder der erste und der zweite Knoten ein jeweils für den anderen Knoten adressiertes Uplinkpaket in dem zweiten Bereich in einen Block für das Uplinkpaket senden, wenn ein für den jeweiligen Knoten adressiertes Downlinkpaket und/oder Uplinkpaket korrekt empfangen wurde.

Entsprechend einem weiteren Ausführungsbeispiel werden also die Ressourcenblöcke während der Paketwiederholphase entweder einzelnen Verbindungen oder einzelnen Relayknoten zugewiesen. Dabei findet eine Mehrfachzuweisung statt, das heißt jeder Ressourcenblock (zweiter Bereich) kann entsprechend einer Prioritätenliste durch mehrere Relayknoten zur Paketwiederholung genutzt werden, sofern die Ressourcen nicht durch einen anderen Relayknoten mit höherer Priorität genutzt werden.

Entsprechend einem weiteren Ausführungsbeispiel ist der zweite Bereich des Superframes unterteilt in einen Block für das Uplinkpaket und einen Bereich für das Downlinkpaket. Hierdurch wird also auch erreicht, dass bidirektional Daten ausgetauscht werden können, wie zum Beispiel beim Hauptaspekt schon erläutert.

### Aspekt Cooperative Relaying mit adaptiven Overloading

Entsprechend einem Ausführungsbeispiel kann in dem Kommunikationsnetzwerk ein dritter und/oder weiterer Knoten als Relayknoten verwendet werden. Hierbei ist die potenzielle Anzahl von Relayknoten also >= 2 und theoretisch unbegrenzt. Die Kommunikationsverbindung zwischen der Basisstation und dem ersten Knoten erfolgt in selektiver Weise über den dritten oder weiteren Knoten oder auch über mehrere Knoten, z. B. dem zweiten Knoten und dem dritten oder weiteren Knoten. Entsprechend einem Ausführungsbeispiel weist das Kommunikationsnetzwerk eine Steuerung auf, die ausgebildet ist, um eine Relayverbindungsqualität für die Verbindung zwischen der Basisstation und dem ersten Knoten über den zweiten oder den dritten als Relayknoten verwendeten Knoten sowie eine Relayverbindungsqualität für die Verbindung zwischen der Basisstation und dem ersten Knoten über den weiteren als Relayknoten verwendeten Knoten zu ermitteln. Die Auswahl zwischen dem zweiten, dritten und weiteren Knoten erfolgt in Abhängigkeit der jeweiligen Relayverbindungsqualität. Hierbei kann auch ausgewählt werden, dass entweder nur der zweite Knoten oder nur der dritte Knoten oder nur der weitere Knoten oder eine Kombination aus dem zweiten und dritten oder dem zweiten und weiteren Knoten verwendet wird. Dieses Ausführungsbeispiel ist vorteilhaft, da so immer für jeden Quellknoten (hier exemplarisch der erste Knoten) immer die optimale Verbindungsqualität über einen oder mehrere Hops erreicht wird.

Entsprechend einem Ausführungsbeispiel baut der dritte Knoten (z.B. als Relayknoten verwendeter Knoten) eine Verbindung mit der Basisstation über einen Relayknoten auf, wobei eine Priorisierung der Verbindung zwischen der Basisstation und dem ersten Knoten und der Basisstation und dem dritten Knoten erfolgt. Entsprechend Ausführungsbeispielen kann in Abhängigkeit der Priorisierung der zweite Bereich des Superframes belegt werden. Entsprechend einem Ausführungsbeispiel ist jeder Block des zweiten Bereichs beziehungsweise allgemein der zweite Bereich in Teilbereiche unterteilt, wobei die unterteilten Teilbereiche entsprechend priorisierend belegt werden. Alternativ wird der erste Teilbereich (jedes Blocks) des zweiten Bereichs für die höchste priorisierte Verbindung verwendet.

Entsprechend einem weiteren Ausführungsbeispiel kann mittels eines LBT-Algorithmuses (listen before transmit algorithm) eine Belegungserkennung der Ressourcen des zweiten Bereichs oder von Teilbereichen der Ressourcen des zweiten Bereichs erfolgen. Hierbei kann ein zweiter Teilbereich (jedes Blocks) des zweiten Bereichs verwendet werden, wenn durch die Basisstation oder einem der Knoten, zugeordnet zu einer niedriger priorisierten Verbindung oder durch eine Steuerung, erkannt wird, dass für eine gewisse Zeit die Ressourcen des ersten Teilbereichs unbenutzt sind. Entsprechend einem Ausführungsbeispiel vergibt eine Steuerung, wie zum Beispiel eine Steuerung in der Basisstation, die Priorisierung mittels einer Ressourcenzuweisung für den zweiten Bereich zu den Knoten und/oder der Basisstation. Entsprechend einem weiteren Ausführungsbeispiel kann eine dedizierte Ressourcenzuweisung oder eine beliebige Ressourcenzuweisung erfolgen.

Ein weiteres Ausführungsbeispiel schafft ein Verfahren zum Betreiben eines Kommunikationsnetzwerks, wie es oben erläutert wurde. Das Verfahren umfasst den Schritt des Übermittelns eines Superframes von der Basisstation an den ersten Knoten oder von dem ersten Knoten an die Basisstation, wobei das Superframe einen ersten und einen zweiten Bereich aufweist. Der erste Bereich dient zur Übertragung von einem oder mehreren Datenpaketen oder zur Übertragung von einem oder mehreren Datenpaketen im Downlink oder zur Übertragung von einem oder mehreren Datenpaketen im Uplink, wobei der zweite Bereich zur Wiederholübertragung oder Weiterleitungsübertragung dient. Das Verfahren kann entsprechend Ausführungsbeispielen den zusätzlichen Schritt des Verwendens eines dritten oder weiteren Knotens als Relayknoten aufweisen, wobei eine Kommunikationsverbindung zwischen der Basisstation und dem ersten Knoten in selektiver Weise über den zweiten, dritten oder weiteren Knoten erfolgt.

Entsprechend weiteren Ausführungsbeispielen kann das Verfahren computerimplementiert sein.

### Figurenkurzbeschreibung

Ausführungsbeispiele der vorliegenden Erfindung werden nachfolgend anhand der beiliegenden Zeichnungen erläutert. Es zeigen:
- Fig. 1: eine schematische Darstellung eines Funknetzwerkes;
- Fig. 2: eine schematische Darstellung einer Paketübertragung von einem Quellknoten (SN) zu einem Zielknoten (DN) über ein Relayknoten (RN);
- Fig. 3: eine schematische Darstellung zur Illustration einer Paketübertra-gung von einem Quellknoten zu einem Zielknoten über einen Relayknoten unter Verwendung einer Paketübertragung gemäß einem Basisausführungsbeispiel;
- Fig. 4: eine schematische Darstellung einer Rahmenstruktur in einem OFDMA-basierten Funksystem gemäß Ausführungsbeispielen;
- Fig. 5a und 5b: schematische Darstellungen zur Illustration des Prinzips von Cooperative Relaying mit Network Coding (Beispiel eines Paketübertragungsfehlers mit anschließender Wiederholung eines mittels Network Coding generierten Pakets durch den Relayknoten) gemäß Ausführungsbeispielen ;
- Fig. 6: eine schematische Darstellung einer Zuweisung von Ressourcen zur Paketwiederholung für eine dedizierte Verbindung gemäß weiteren Ausführungsbeispielen;
- Fig. 7: eine schematische Darstellung einer Zuweisung von Ressourcen für Relayknoten zur Paketwiederholung für beliebige Verbindungen gemäß weiteren Ausführungsbeispielen;
- Fig. 8: eine schematische Darstellung zur Illustration des Cooperative Relayings mit Fixed Ressource-Overloading Overloading gemäß Ausführungsbeispielen eines Unteraspekts;
- Fig. 9: ein schematisches Flowchart zur Illustration des Relayings mit Fixed Ressource- -Overloading gemäß Ausführungsbeispielen;
- Fig. 10: eine schematische Tabelle zur Illustration einer RN-Priorisierung (T_{RESSOURCE} beschreibt die Dauer der für die Wiederholung zugewiesenen Ressourcen) gemäß Ausführungsbeispielen; und
- Fig. 11a und 11b: schematische Darstellungen zur Illustration des LBT-Verfahrens innerhalb der Ressourcen zur Paketwiederholung gemäß Ausführungsbeispielen.

### Detaillierte Figurenbeschreibung

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar beziehungsweise austauschbar ist.

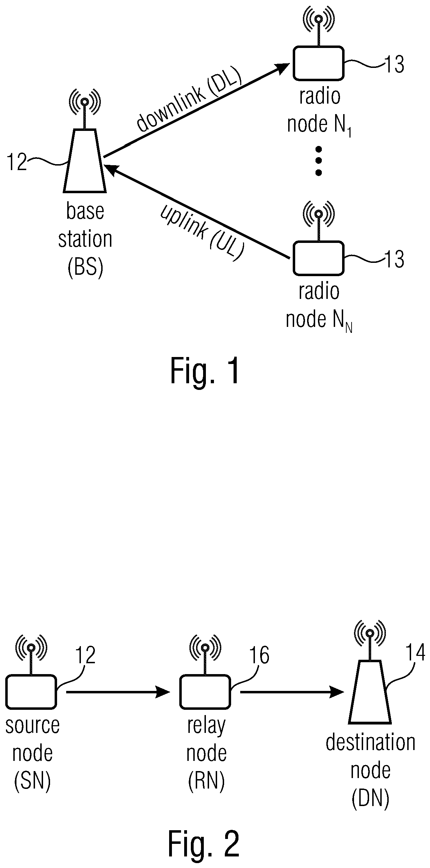

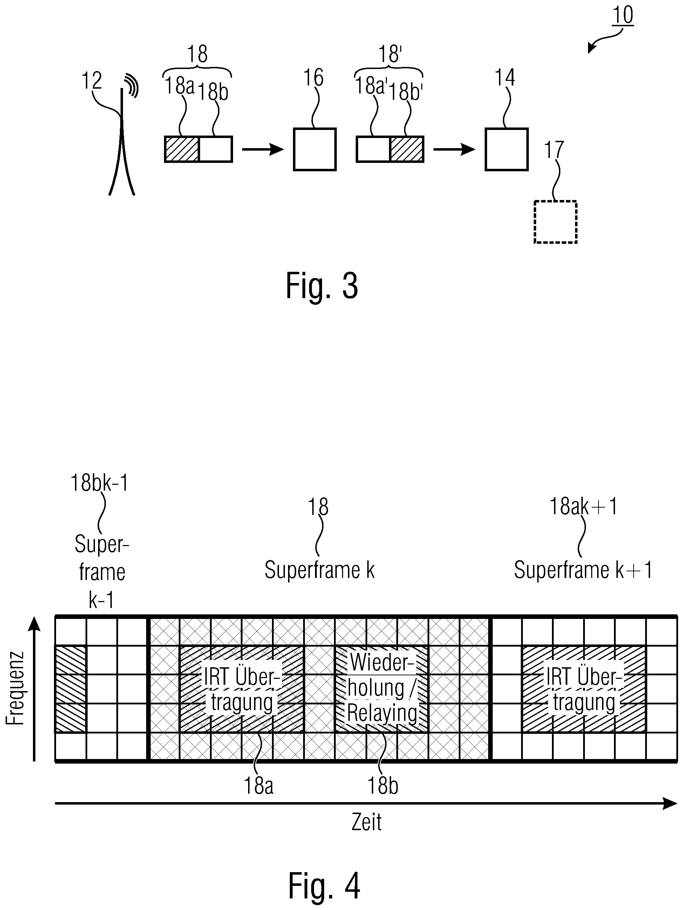

Bevor Ausführungsbeispiele anhand von Fig. 3 im Detail erläutert werden, wird eine Vorbetrachtung zum Netzwerk allgemein angestellt. Diese Vorbetrachtung erfolgt anhand von Fig. 1.

Fig. 1 zeigt ein Kommunikationsnetzwerk mit einer Basisstation BS beziehungsweise 12 und zwei Radio Nodes N1 und N2 beziehungsweise 13.

Das Netzwerk besteht aus einer zentralen Basisstation (12) und mehreren Funkknoten (13) (engl. Radio Node, Nx). Die Basisstation ist dabei für das Management des Netzwerks zuständig, insbesondere der Koordinierung des Kanalzugriffs und das Ressourcenmanagement. Das Netzwerk dient der Übertragung von Informationen zwischen räumlich verteilten Geräten. Eine Paketübertragung von der BS zur einem Funkknoten (13) wird als Downlink (DL) -Übertragung bezeichnet, während eine Übertragung von einem Funkknoten (13) zur BS als Uplink (UL) -Übertragung bezeichnet wird. Ein Funkknoten (13) von dem Nutzdaten übertragen werden sollen, wird als Quellknoten (engl. Source Node: SN) bezeichnet. Das Endgerät, für das das Paket übertragen wird, wird als Zielknoten (engl. Destination Node: DN) bezeichnet. Ein Funkknoten (13), der ein Paket von einem SN weiterleitet, wird als Relayknoten (engl. Relay Node: RN) bezeichnet.

Diese Paketübertragung unter Verwendung eines Relayknotens RN ist in Fig. 2 gezeigt.

Fig. 2 zeigt den Quellknoten SN beziehungsweise hier die Basisstation 12, den Zielknoten DN beziehungsweise hier die Einheit 14 und den dazwischen angeordneten Relayknoten RN beziehungsweise 16.

Aufgrund der Eigenschaften der Funkumgebung wie Pfadverlust, Abschattung, Schwund (engl. Fading) kommt es öfter vor, dass ein Paket am Zielgerät nicht korrekt empfangen wird. Dies wird als Paketübertragungsfehler bezeichnet. In diesem Fall muss das fehlgeschlagenen Paket erneut übertragen werden d. h. eine Paketwiederholung (engl. Retransmission, ReTx) stattfindet.

In isochronen Echtzeit-Funksystemen (engl. isochronous real-time, IRT) ist es erforderlich eine sehr hohe Zuverlässigkeit bei einer sehr geringen garantierten Übertragungslatenz zu erreichen. Insbesondere aufgrund der geforderten kurzen Übertragungslatenzen ist es nicht effektiv, fehlerhaft übertragene Pakete einfach zeitlich versetzt auf der gleichen Frequenz zu wiederholen, da sich der Funkkanal auf der betreffenden Verbindung zwischen Quell- und Zielknoten in so kurzer Zeit kaum geändert hat. Stattdessen ist es in Echtzeit-Funksystemen sinnvoll, die Frequenz- oder räumliche Diversität für die Paketwiederholung auszunutzen.

Dafür wird die Paketwiederholung durch einen geeigneten Relayknoten anstelle des Quellknotens durchgeführt. Das Ziel besteht darin, die Wahrscheinlichkeit einer erfolgreichen Paketübertragung zu erhöhen, indem im Fall eines Übertragungsfehlers das Paket auf einem anderen räumlichen Weg übertragen wird. Dabei können die anderen Funkknoten des Netzwerks die Funktion eines Relayknotens übernehmen oder sie sind zusätzlichen Funcknoten im Netzwerk.

Fig. 3 zeigt ein Kommunikationsnetzwerk 10 mit zumindest einer Basisstation 12, einem ersten Knoten 14 sowie einem zweiten Knoten 16. Zusätzlicher Weise kann auch ein weiterer Knoten 17 vorgesehen sein. Bei diesem Ausführungsbeispiel wird der Downlink erläutert, das heißt also, dass Daten beziehungsweise zumindest ein Datenpaket von der Basisstation 12 zu dem ersten Knoten 14 übermittelt werden soll. Die Übermittlung erfolgt in sogenannten Superframes, die hier mit dem Bezugszeichen 18 versehen sind. Jedes Superframe weist zumindest einen ersten und einen zweiten Bereich auf, wobei der erste Bereich mit dem Bezugszeichen 18a versehen ist und der zweite Bereich mit dem Bezugszeichen 18b. Die eigentliche Übermittlung der ein oder mehreren Datenpakete erfolgt in dem ersten Bereich 18a, wie hier anhand der schraffierten Fläche bei der Aussendung von der Basisstation 12 illustriert ist. Es sei angemerkt, dass jeder Bereich 18a beispielsweise mehrere Ressourcenblocks (vgl. einzelne t-f-Blocks / Ressourcenblocks) aufweisen kann. Es sei hypothetischer Weise davon ausgegangen, dass die Entfernung zwischen dem Knoten 14 und der Basisstation 12 zu groß ist, so dass die erste Knoten 14 das Signal, dass von der Basisstation 12 ausgesendet wird, nicht optimal empfängt. Das Signal wird allerdings von dem zweiten Knoten 16 korrekt empfangen.

Dieser zweite Knoten 16 dient als Relayknoten und leitet das Signal ausgehend von einem Control Command, eine NACK-Signalisierung von dem ersten Konten oder ohne zusätzlichen Control Command weiter. Die Weiterleitung kann in demselben Superframe 18 oder in einem nachfolgenden Superframe 18' erfolgen. Um die Ressourcen jedoch eindeutig zu trennen, erfolgt die Wiederholsendung beziehungsweise Weiterleitungssendung nicht in dem ersten Bereich 18a, sondern in dem zweiten Bereich 18b.

Bei dem Aspekt wird also das Funksystem 10 derart betrachtet, dass ein Kanalzugriff durch ein Ressourcenmanagement gesteuert wird. Beispielsweise kann das Ressourcenmanagement durch die Basisstation durchgeführt werden und spezielle Nachrichten an die Funcknoten verteilen, welche für ein oder mehrere Superframes gültig ist.

Das auf der physikalischen Ebenen eingesetzte Modulationsverfahren erlaubt dabei eine Ressourceneinteilung in Zeit (Time Division Multiple Access, TDMA) oder einer Kombination mit einer Frequenzeinteilung (Frequency Division Multiple Access), wie es beispielsweise in OFDMA (Orthogonal Frequency Division Multiple Access) oder Single Carrier-Frequency Division Multiple Access (SC-FDMA) realisiert ist. In diesem Fall können die Ressourcen in einem Zeit-Frequenz Raster den einzelnen Übertragungen zugeordnet werden. Je nach eingesetztem Zugriffsverfahren arbeitet das Ressourcenmanagement auf Basis von Zeitschlitzen oder Zeit-Frequenzblöcken. Diese Einheiten werden nachfolgend als Ressourcen oder Ressourcenblöcke synonym bezeichnet.

Das betrachtete Funksystem führt eine isochrone zyklische Kommunikation durch, die in gleichgroße Rahmen (engl.: Superframes) eingeteilt ist. In jedem Superframe werden echtzeit-kritische Prozessdaten der Anwendung übertragen (IRT Übertragung). Zuerst erfolgt die Übertragung der IRT Prozessdaten im DL, gefolgt von den IRT Übertragungen im UL beziehungsweise umgekehrt. Zum Ausgleichen von Übertragungsfehlern während der IRT Übertragung sind in jedem Rahmen zusätzliche Ressourcen für Paketwiederholungen durch die Quellknoten oder Relayknoten vorgehalten. Diese Phase folgt nach der IRT Übertragung.

Die einzelnen Phasen sind anhand von Fig. 4 dargestellt. Fig. 4 zeigt ein Superframe k nachfolgend zu einem Superframe k-1 beziehungsweise vor einem Superframe k+1. Diese drei Superframes k, k-1 und k+1 sind entlang der Zeitdimension aufgezeichnet, haben aber, wie hier dargestellt, auch noch eine Frequenzdimension. Die Zeit- und die Frequenzdimension definieren zusammen die zur Verfügung stehenden Ressourcen in diesem Ausführungsbeispiel BWP (bandwidth portion beziehungsweise Bandbreitenbereich).

Jedes Superframe 18 beziehungsweise k kann in zumindest zwei Bereiche 18a und 18b unterteilt werden. Der erste Bereich 18a dient zur direkten Übertragung (IRT Übertragung), während der zweite Bereich 18b zur Wiederhol- beziehungsweise Weiterleitungsübertragung dient. Wie nachfolgend noch erläutert werden wird, kann bei dem Bereich 18a und 18b sowohl Uplink als auch Downlinkdatenverkehr vorhanden sein. Beispielsweise kann jeweils ein erster Teil des ersten Bereichs 18a für den Downlink, z. B. von der Basisstation zu dem ersten Knoten als Endgerät, vorgesehen sein, während ein zweiter Teil des ersten Bereichs 18a dann für den Uplink, z. B. von dem ersten Knoten zu der Basisstation vorgesehen ist. Eine ähnliche, vergleichbare oder identische Struktur kann dann auch für die Wiederholübertragung im Uplink und Downlink im zweiten Bereich 18b vorgesehen sein, das heißt also, dass dieser jeweils einen ersten und einen zweiten Teil für die Wiederholübertragung im Uplink und Downlink aufweist. Der zweite Bereich kann sich jedoch stark vom ersten Bereich unterscheiden.

Entsprechend Ausführungsbeispielen muss dieselbe Struktur der Bereiche 18a und 18b auch im Superframe k+1 (hier 18ak+1 gezeigt) sowie auch im vorherigen Superframe k-1 (hier 18bk-1 gezeigt) vorhanden sein.

Entsprechend Ausführungsbeispielen werden die verbleibenden Ressourcen für die Signalinformationen und andere nicht echtzeit-kritische Übertragungen genutzt.

Die nachfolgenden Verfahrensbeschreibungen beziehen sich immer auf den aktuellen Superframe, wenn dies nicht explizit anders angegeben.

Die Funkknoten signalisieren in ihren UL Paketen oder separaten Signalisierungspaketen, ob bzw. welche der vorherigen DL IRT Pakete sie korrekt empfangen konnten. Umgekehrt signalisiert die BS in einem Paket, welche UL IRT Pakete sie korrekt empfangen konnte. Die nachfolgende Beschreibung der Erfindung bezieht sich auf das Scheduling und Management der Paketwiederholungen bzw. -weiterleitungen.

Nachfolgend werden optionale Aspekte im Zusammenhang mit dem oben erläuterten Cooperative Relaying erläutert. In Abhängigkeit davon, welche IRT Pakete und Signalisierungsinformationen ein Relayknoten während der IRT Übertragung korrekt empfangen konnte, ergeben sich verschiedene Optionen für das Paket, das der Relayknoten aussenden kann. Nachfolgend werden alle Pakete die von Relayknoten ausgesandt werden, als Relay-Pakete bezeichnet.

Entsprechend Ausführungsbeispielen kann ein Relayknoten ein IRT Paket in unveränderter Form weiterleiten (direkten Paketwiederholung). Die direkte
Paketwiederholung ist z.B. geeignet, wenn:
- 1a.: der Relayknoten nur ein IRT Paket einer Verbindung (DL oder UL) korrekt empfangen und dekodieren konnte, oder
- 1b.: der Relayknoten durch Auswertung von Signalisierungsinformationen detektiert, dass nur die Übertragung eines IRT Paketes (DL oder UL) der Verbindung fehlerhaft war und er dieses Paket korrekt empfangen hat, oder
- 1c.: genügend Ressourcen für exklusive Uplink- und Downlink-Übertragungen zur Verfügung stehen.

Auch kann ein Relayknoten ein IRT Paket in modifizierter Form (modifizierte Paketwiederholung) weiterleiten.

Die modifizierte Paketwiederholung eignet sich z.B., wenn:
- 2a.: der Relayknoten beide IRT Pakete einer Verbindung (DL und UL) korrekt empfangen und dekodieren konnte, inklusive der Signalisierungsinformationen über den fehlgeschlagenen Empfang der Pakete bei einem oder beiden Knoten der Verbindung, oder
- 2b.: der Relayknoten beide IRT Pakete einer Verbindung (DL und UL) korrekt empfangen und dekodieren konnte, exklusive der Signalisierungsinformationen über den Empfang der Pakete bei den beiden Knoten der Verbindung.

Entsprechend Ausführungsbeispielen kann in den Fällen 2a und 2b der Relayknoten eine Verknüpfung des DL und UL IRT Paketes einer Verbindung durchführen mit Methoden der Netzwerkkodierung, wie beispielsweise durch eine bit-weise XOR Operation. Entsprechend Ausführungsbeispielen kann der XOR-Verknüpfungsfall (network encoded Modus) durch ein Signal / Flag, z.B. über ein 1-bit Flag signalisiert werden. Zum Hintergrund: Es kann sein, dass der Relayknoten nur UL oder DL empfangen hat. Anhand des Flags ist es möglich, zu bestimmen, ob in dem Paket nur DL, nur UL oder DL XOR UL enthalten ist. Entsprechend Ausführungsbeispielen führt der Relayknoten bei einem Flag, das das XOR signiert, ein XOR- Dekorrelation des empfangenen Signals (2. Bereich) und des eigens gesendeten Signals durch. Bei Fehlen des Flag, kann der Knoten durch einfachen Vergleich des empfangenen Signals und des eigens gesendeten Signals bestimmen, ob im zweiten Bereich das eigene Datenpaket zurückgesendet oder ein von extern gesendetes Datenpaket weitergeleitet ist.

In Fig. 2 wird eine symmetrische Verbindung mit Paketen gleicher Länge betrachtet. Wenn die Länge der DL- und UL-Pakete ungleich ist, wird das kürzere Paket mit Nullen aufgefüllt (Zero-Padding), bevor die XOR-Operation durchgeführt wird. Ein solches Relay-Paket kann beim Zielknoten dekodiert werden, vorausgesetzt, die Länge des ursprünglichen Pakets ist dem Zielknoten bekannt.

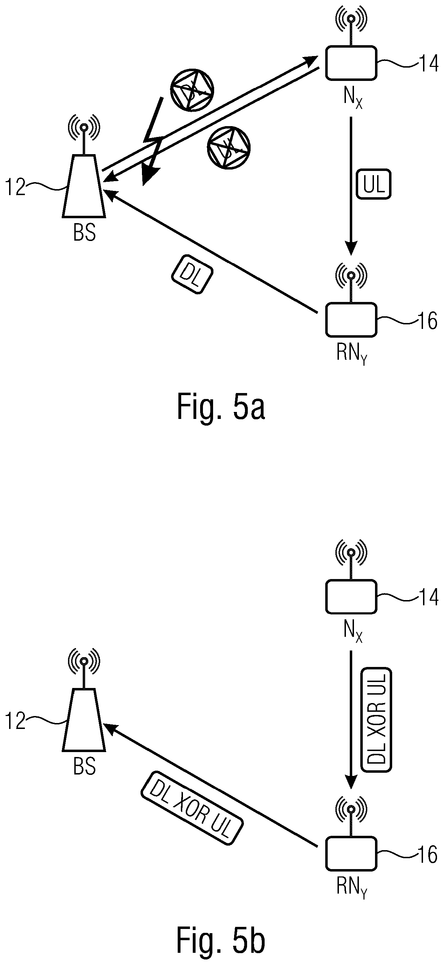

Bezugnehmend auf Fig. 5a und 5b wird nun ein Cooperative Relaying mit Network Coding erläutert.

Fig. 5a zeigt die Basisstation 12 (BS), den Relayknoten 16 (RN_{Y}) sowie den Zielknoten 14 (Nx). Wie zu erkennen ist, ist keine Verbindung, weder Uplink noch Downlink zwischen Basisstation 12 und dem Knoten 14 möglich. Sowohl dieUplink als auch Downlink Übertragungen sind fehlgeschalgen. Ausgehend von dem in Fig. 5a dargestellten Übertragungsfehler erfolgt also anschließend eine Wiederholung eines mittels Network Coding generierten Pakets durch den Relayknoten 14, was in Fig. 5b dargestellt ist. Sowohl im Downlink als auch im Uplink können die Downlink- und Uplinkpakete mittels XOR verknüpft werden (vgl. DL XOR UL). Mit einem weiteren XOR-Operation am Empfänger mit dem eigenen Paket, kann das Paket vom Quellknoten extrahiert werden.

Für die Paketwiederholung priorisiert jeder Knoten 14 anhand von verschiedenen Metriken, die im aktuellen Frame von ihm vorbereiteten Relaypakete, wie nachfolgend noch diskutiert werden wird. In dieser Priorisierung kann mitberücksichtigt werden, ob der Relayknoten 14 die Signalisierungsinformation im aktuellen Superframe über den fehlerhaften Empfang der IRT Pakete am jeweiligen Zielknoten empfangen konnte. Diese Signalinformation kann sich beispielsweise als ACK oder NACK-Information ausprägen, wobei dann das Relay entsprechend Ausführungsbeispielen dieses ACK oder NACK aus dem Superframe oder dem vorherigen Superframe ausliest und in Abhängigkeit hiervon die Wiederholpakete entsprechend im Uplink und/oder Downlink übermittelt.

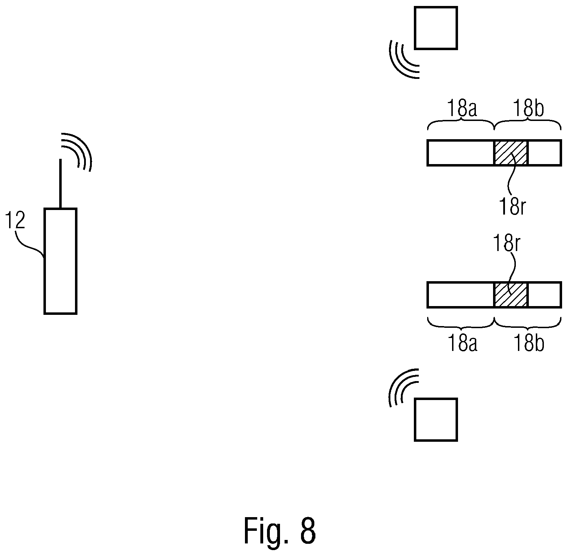

Entsprechend Ausführungsbeispielen kann das Cooperative Relaying mit sogenanntem Ressourcen-Overloading erfolgen. Dieses Ansatz ist am Beispiel der Netzwerkpartner 12, 14 und 16 in Fig. 8 dargestellt. Bei diesem Ansatz wird eine Ressource 18br für die Wiederholübertragung, das heißt also eine Ressource zugehörig zu dem zweiten Bereich 18b im Superframe 18, einem Paar von Knoten, z. B. dem Knotenpaar 14 und 16, zugeordnet. Das Knotenpaar 14 und 16, das heißt also jeder Teilnehmer dieses Paares, umfassend die Knoten 14 und 16, nutzen genau die Ressource zur Wiederholübertagung, unabhängig davon, ob eine Wiederholübertragung z. B. durch Signalisierung, notwendig erscheint oder nicht. Hintergrund ist, wenn beispielsweise ein initial von der Basisstation 12 ausgesendetes Set von Datenpaketen adressiert an die Knoten 14 und 16 von den Knoten 14 und 16 korrekt empfangen wird, erfolgt jeweils eine Weiterleitung des an den anderen Knoten empfangenen Datenpakets, wobei das allerdings unproblematisch ist, da ja dann gar keine Wiederholübertragung notwendig ist. Im Detail: Wenn man beispielsweise davon ausgeht, dass sowohl der Knoten 14 als auch der Knoten 16 sich im Empfangsbereich von der Basisstation 12 befinden, können beide Knoten 14 und16 das Paketempfangen. Der erste Bereich 18a kann beispielsweise zwei Datenpakete, eins adressiert an den Knoten 14 und eins adressiert an den Knoten 16, umfassen. Der Knoten 14 empfängt beide Datenpakete in dem Bereich 18a, extrahiert sich das eine Datenpaket und leitet das andere Datenpaket an den Knoten 16 weiter. Der Knoten 16 macht im Wesentlichen dasselbe, extrahiert sich nämlich das an ihn adressierte Datenpaket und leitet das an den Knoten 14 adressierte Datenpaket weiter. Die beiden Weiterleitungen des Knotens 16 und des Knotens 14 erfolgt in der jeweils gleichen zugewiesenen Ressource, zugehörig zu dem zweiten Bereich 18b. Es ist davon auszugehen, dass diese Weiterleitung dann wohl fehlerhaft sein wird, da ja beide Knoten 14 und 16 die gleiche Ressource nutzen, so dass es hier zu einem hohen Signalrauschverhältnis kommen kann. Das ist allerdings unproblematisch, da ja jeder Knoten 14 und 16 das eigene Datenpaket schon korrekt empfangen hat.

Im Fall, dass einer der Knoten, z. B. der Knoten 14, allerdings sein Datenpaket nicht korrekt empfangen hat, hat er sehr wahrscheinlich eine schlechte Empfangsbedingung zu 12 und hat sehr wahrscheinlich auch das weiterzuleitende Datenpaket nicht korrekt empfangen und führt deshalb auch keine Weiterleitung durch. Insofern ist die Ressource 18b, die für das Paar 14+16 reserviert ist, frei. Der Knoten 16 empfängt das an ihn adressierte und das an den Knoten 14 adressierte Datenpaket, leitet das an den Knoten 14 adressierte Datenpaket weiter, wobei ausgehend von der ungestörten Ressource der Knoten 14 dann das weitergeleitete Datenpaket erhält. Insofern ermöglicht dieser Ansatz vorteilhafterweise, dass ohne einen Austausch von Steuerungsinformationen eine Weiterleitung erfolgen kann, indem einfach eine Ressource für ein Paar von Knoten 14+16 reserviert ist und die Knoten 14 und 16 den Bereich 18b des Superframes sowie Wiederholübertragung ausnutzen, unabhängig davon, ob eine Störung erkannt wurde oder nicht. Dieser Ansatz wird nachfolgend in Bezug auf weitere, optionale Details vertieft.

Entsprechend Ausführungsbeispielen können ein Relay einer Basisstation-Zielknoten-Verbindung zugeordnet werden; alternativ wäre es denkbar, dass ein Paar von Knoten definiert werden, die sich gegenseitig bei Ihrer Kommunikation mit der Basisstation oder einem weiteren Koten unterstützen, z.B. derart, dass der eine Knoten des Paares Signal für den anderen Knoten weiterleitet.

Dabei bereitet der weiterleitenden Knoten primär die Relay-Pakete für die Weiterleitung / Verbindungen vor, bei denen er die Signalisierung eines Übertragungsfehlers erhalten hat. Sekundär bereitet er auch Relay-Pakete für die Verbindungen vor, von denen er keine Signalisierung über eine erfolgreiche Übertragung in DL und UL erhalten hat.

In dem Superframe sind Ressourcen für Paketwiederholungen vorgesehen (vgl. Fig. 4). Die Zuteilung der Ressourcen kann auf zwei unterschiedliche Arten erfolgen.

### Zuweisung von Ressourcen für dedizierte Verbindungen

Zum einen können dedizierte Ressourcenblöcke zur Wiederholung von Funkpaketen auf einer bestimmten Verbindung zwischen der Basisstation und eines bestimmten Funkknotens reserviert werden, z.B. für die Verbindung BS - N1. Zu beachten ist hierbei, dass mit dieser Zuweisung noch nicht festgelegt ist, welche Relayknoten die Paketwiederholung für die verschiedenen Verbindungen ausführt. Diese Reservierung signalisiert die Basisstation allen Funkknoten mit Vorlauf, d.h. in dem Beispiel vor Beginn des aktuellen Superframes (Superframe k).

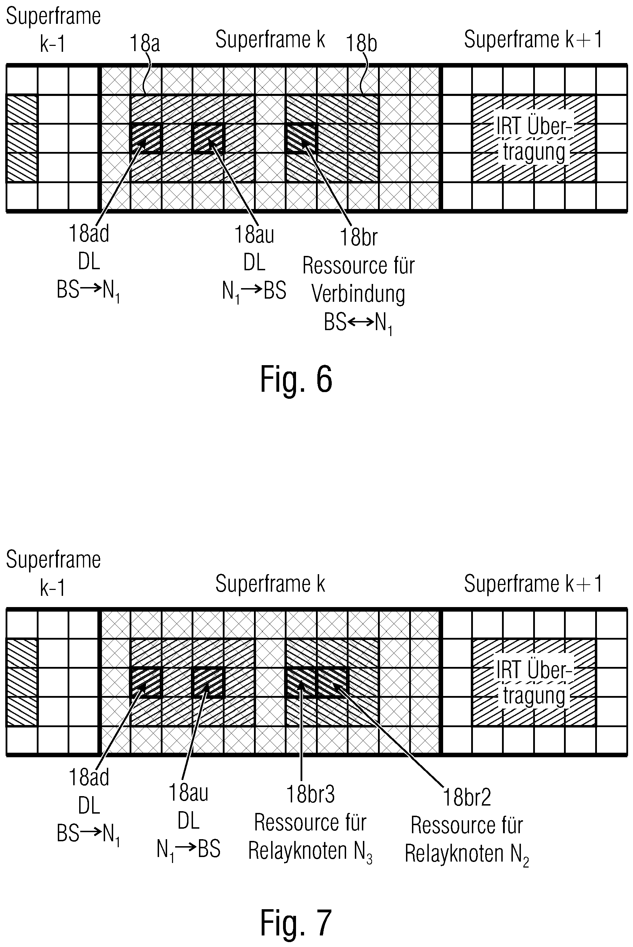

Fig. 6 zeigt ein Superframe 18 mit einem ersten Bereich 18a und einem zweiten Bereich 18b. Ferner sind in dem ersten Bereich 18a sowohl eine Downlink-Ressource 18ad und eine Uplink-Ressource 18au sowie in dem zweiten Teil 18b eine reservierte Ressource 18br gezeigt.

### Zuweisung von Ressourcen für dedizierte Relayknoten

In dem alternativen Verfahren werden mehrere Ressourcenblöcke für bestimmte Knoten / Verbindungen zwischen zwei Knoten reserviert, die zur Wiederholungsübertragung von Paketen bisheriger Verbindungen genutzt werden können. Insofern werden für dedizierte Relayknoten jeweils ein oder mehrere Ressourcenblöcke reserviert, die sie zur Wiederholung von Paketen einer beliebigen Verbindung nutzen können. Diese Reservierung signalisiert die Basisstation allen Funkknoten mit Vorlauf, d. h. in dem Beispiel vor Beginn des aktuellen Superframes (Superframe k). Innerhalb der jeden Relayknoten zugeordneten Ressourcen ist dieser Relayknoten der Primärnutzer. Andere Relayknoten oder auch die Quellknoten können auf diese Ressourcen nur als Sekundärnutzer zugreifen. Das ist beispielsweise in Fig. 7 illustriert.

Fig. 7 zeigt das Superframe 18 mit den Bereichen 18a und 18b sowie die im Superframe 18a reservierten Bereiche 18ad und 18au. In dem Bereich 18b sind Ressourcen zugeordnet zu Relayknoten reserviert (vgl. Bezugszeichen 18br2 und 18br3).

An dieser Stelle sei angemerkt, dass die Basisstation mithilfe einer wiederkehrenden aktualisierten Zuweisung die Ressourcen 18ad, 18au, 18br2, 18br3 entsprechend anders verteilen kann. Entsprechend einem Ausführungsbeispiel wird bei der Zuweisung der Ressourcenblöcke zu den Relayknoten dabei die Verbindungsqualität, z.B. LQI (engl: Link Quality Indikator) der verschiedenen Verbindungen im Netzwerk berücksichtigt. Das kann u. a. auf folgende Art erfolgen:
1. Sortierung der Verbindungen zwischen der Basisstation und allen Funkknoten entsprechend ihrer Verbindungsqualität in aufsteigender Reihenfolge, d.h. LQIBS, N_1 < LQIBS, N_2 < ... < LQIBS, N_N;
2. Zuweisung des zeitlich ersten Ressourcenblocks zu dem Relayknoten RNx, der die höchste Verbindungsqualität zur Basisstation hat (LQIBS, RN_x), im Vergleich zu allen anderen Relayknoten, die der Verbindung zugeordnet sind;
3. Wiederholung des Schrittes 2 für alle weiteren Verbindung entsprechend der aus Schritt 1 festgelegten Reihenfolge.

Alternativ lässt sich die Verbindungsqualität anhand unterschiedlicher Metriken bestimmen, die den Zustand der Verbindung hinsichtlich seiner aktuellen bzw. prognostizierten Übertragungseigenschaften beschreiben. Beispiele für solche Metriken sind Parameter wie Empfangsleistung, Paketfehlerrate in der Vergangenheit, Signalrauschabstand (SNR), Signal-zu-Interferenz-und-Rausch Abstand (SINR), ... oder eine Kombination.

Entsprechend einem Ausführungsbeispiel kann eine 1:1 Paarung verwendet werden.

Die Funkknoten werden in Paare eingeteilt, die wechselweise füreinander die Rolle des Relay-Knotens übernehmen. In der Paketwiederholungsphase werden jedem Relaypaar zwei Ressourcenblöcke für jeweils eine DL- und eine UL-Paketübertragung zugewiesen. In dem gemeinsamen Ressourcenblock zur DL -Paketwiederholung leitet ein RN nur dann ein DL-Paket seines Partner-Knotens weiter, wenn die eigene DL und UL-Paketübertragung in der Übertragungsphase erfolgreich war. Wenn das eigene Paket (oder ACK) nicht empfangen wurde, lässt dieser RN in dem gemeinsamen Ressourcenblock für DL Paketwiederholungen frei. In analoger Weise wird der gemeinsame Ressourcenblock für UL Paketwiederholungen genutzt.

Auf diese Weise kommt es nur dann zu einer Kollision durch Ressourcenblock-Overloading, wenn beide RNs ihre eigenen Pakete in der IRT Übertragungsphase erfolgreich empfangen haben. In diesem Fall ist eine Kollision jedoch unkritisch.

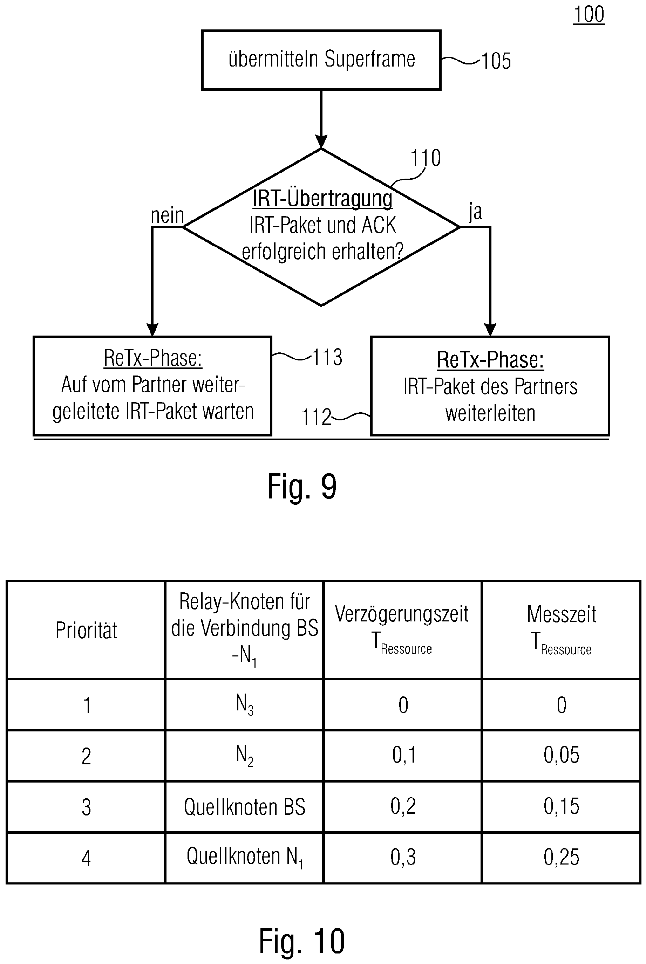

Bezugnehmend auf Fig. 9 wird nun ein Verfahren von Relaying mit fest zugewiesenem Ressourcenblock und Overloading erläutert, wobei hier von der Basisvariante ausgegangen wird. Jeder Relayknoten, z. B. 14 oder 16 oder auch 17 (vgl. Fig. 3), überprüft, ob die IRT Übertragung (Übertragung des Superframes 18 mit zumindest dem ersten Paket 18a) erfolgreich war. Dieser Schritt ist mit dem Bezugszeichen 110 markiert. Der genaue Inhalt kann beispielsweise die Überprüfung des erfolgreichen Erhaltens eines IRT Pakets und ACK-Signals umfassen. Ist die Übertragung erfolgreich, wird in der ReTx-Phase das IRT Paket des Partners weitergeleitet (vgl. Schritt 112). Ist der Schritt nicht erfolgreich, wird auf ein vom Partner weitergeleitetes IRT Paket gewartet (vgl. Schritt 113).

Insgesamt fügt sich dieses Verfahren auf jedem Knoten in das Gesamtverfahren 100 ein, das initial den Schritt 105 aufweisen kann. Der Schritt 105 bezieht sich auf die Übermittlung eines Superframes von einer Basisstation an allen Knoten, wobei das Superframe einen ersten und einen zweiten Bereich aufweist. Wie bereits oben erwähnt, dient der erste Bereich zur Übertragung von einem oder mehreren Datenpaketen oder zur Übertragung von einem oder mehreren Datenpaketen im Downlink oder zur Übertragung von einem oder mehreren Datenpaketen im Uplink. Auch eine Kombination ist möglich. Der zweite Bereich dient zur Wiederholübertragung beziehungsweise Weiterleitungsübertragung.

Nachfolgend wird ein adaptives Ressourcen-Overloading entsprechend einem weiteren Ausführungsbeispiel erläutert. Im Fall eines Übertragungsfehlers eines Funkpaketes zwischen der Basisstation und einem Funkknoten, muss der Inhalt des Funkpaketes vollständig oder in modifizierter Form wiederholt übertragen werden. Wenn ein oder mehrere Relayknoten das Paket A empfangen haben, so können sowohl die Relayknoten oder der Quellknoten selbst die Information des Paketes an den Zielknoten übertragen.

Beispielsweise, wenn im Downlink die Übertragung eines Paketes A von der BS zu Knoten N1 fehlschlägt und die Knoten N2 und N3 das Paket A korrekt empfangen konnten, so kann das Paket A von der BS und von N2 und N3 als Relayknoten wiederholt werden.

Um Sicherzustellen, dass der Zielknoten den Inhalt des Paketes A empfängt, werden ein oder mehreren Relayknoten und der Quellknoten beauftragt, das Paket A zu wiederholen, sofern sie das Paket A empfangen haben und die zugewiesenen Ressourcen frei sind. Diese Beauftragung wird durch die Basisstation mithilfe eine Vorkonfiguration oder einer wiederkehrend aktualisierten Signalisierung, jeweils vor Beginn des betreffenden Superframes realisiert. Wie oben beschrieben, kann das Scheduling der Ressourcen für diese Wiederholung auf zwei verschiedene Arten durchgeführt werden:
1. Zuweisung von Ressourcen zur Paketwiederholung für eine dedizierte Verbindung zwischen der BS und einem bestimmten Funkknoten,
2. Zuweisung von Ressourcen für Relayknoten zur Paketwiederholung für beliebige Verbindungen zwischen BS und Funkknoten.

Bei dem alternativen Verfahren (gemäß Ausführungsbeispielen) werden nachfolgend einzeln erläutert: Durch das Netzwerkmanagement ist jeder Verbindung eine Gruppe aus ein oder mehreren Relayknoten zugeordnet. Diese Gruppe der Relayknoten sind zusammen mit der BS in einer Relayknoten-Priorisierungstabelle zusammengefasst, wobei die Priorität gewählt ist entsprechend der Verbindungsqualität zwischen der BS über den Relayknoten zu N1, bzw. der direkten Verbindung BS - N1. Diese RN-Priorisierungstabelle gibt die Reihenfolge vor, in der die Relayknoten und der Quellknoten (BS: bei DL Paketen, N1: bei UL Paketen) versuchen fehlerhafte Pakete der Verbindung zu wiederholen. Jedem Eintrag in der Tabelle ist eine Messzeit und eine Verzögerungszeit zugeordnet, die mit abnehmender Priorität zunimmt. Die Verzögerungszeit ist dabei immer größer als die Messzeit. Der Knoten mit der höchsten Priorität ist der Primärnutzer der betreffenden Ressource. Alle anderen Knoten sind Sekundärnutzer der Ressource. Fig. 10 zeigt eine Priorisierungstabelle.

Diese RN-Priorisierungstabellen wird den Funkknoten im Netzwerk durch Vorkonfiguration oder wiederholte Signalisierung bekannt gegeben.

Nach der Übertragung der IRT Pakete bereiten alle der Verbindung BS-N1 zugeordneten Relay Nodes, eine Relay-Paket vor, sofern sie alle dafür benötigten Pakete empfangen konnten und der Verbindung Ressourcen für die Paketwiederholung zugeordnet sind. Der Knoten, welcher der Primärnutzer der jeweiligen Ressource zur Paketwiederholung ist (d. h. der Knoten in der Priorisierungstabelle mit der höchsten Priorität), sendet sein vorbereitetes Relay-Paket zu Beginn der zugewiesenen Ressourcen. Falls er das Paket nicht vorbereiten konnte, sendet er nichts. Ist der Knoten mit der höchsten Priorität gleich der Quellknoten, so sendet er das Paket A erneut aus.

Jeder andere Relayknoten in der RN-Priorisierungstabelle sind Sekundärnutzer. Sofern sie das Relay-Paket vorbereiten konnten, bzw. wenn sie der Quellknoten der Verbindung sind, führen ein Listen-Before-Transmit (LBT)-Prozedur. Sie beginnt mit einer Kanalüberprüfung (engl.: Clear Channel Assessment) für einer Messzeit Zeit, wie sie in der RN-Priorisierungstabelle spezifiziert ist. Die LBT-Prozedur kann dabei eine Leistungsdetektion oder Paketdetektion in den zugewiesenen Ressourcen enthalten. Im Fall einer Leistungsdetektion misst der betreffende Knoten die Leistung in den zugewiesenen Ressourcen. Übersteigt die Leistung einen vordefinierten Schwellwert, so erkennt der Funkknoten die Ressourcen als belegt. Im Fall der Paketdetektion prüft der Knoten, ob in den zugewiesenen Ressourcen ein Funkpaket der gleichen Funktechnologie beginnt. Ist dies der Fall, erkennt er die Ressourcen als belegt an. Andernfalls interpretiert der Knoten die Ressourcen als unbelegt.

Erkennt ein Relayknoten oder der Quellknoten innerhalb der spezifizierten Messzeit die Ressourcen als unbelegt, so beginnt er die Aussendung seines Relay-Paketes oder der Paketwiederholung.

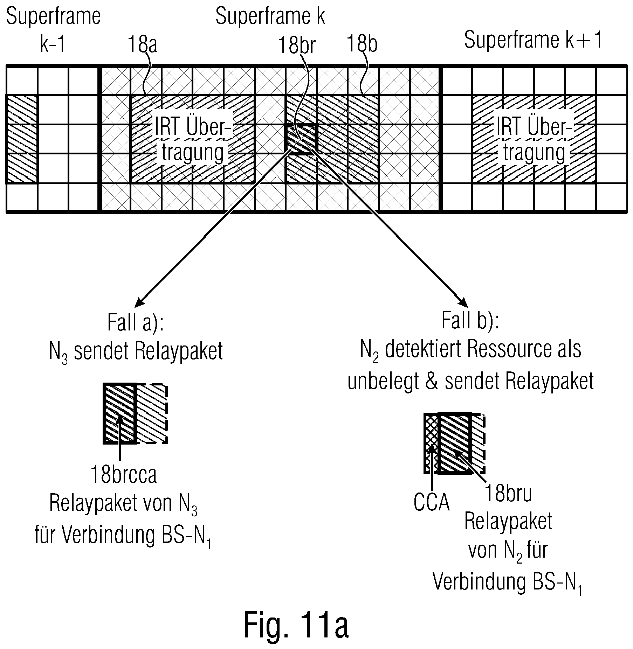

Dieses Messen kann beispielsweise mit einem LBT durchgeführt werden. Ein Beispiel für ein LBT-Verfahren ist im Zusammenhang mit Fig. 11a dargestellt.

Fig. 11a zeigt für zwei Fälle unter Anwendung von listen before talk die Verwendung der Ressource 18br. Im Fall a sendet das Relay-Paket N₃ aus und zwar am Anfang der eigentlichen Ressource 18br. Im Fall b detektiert N₂, dass die Ressource 18br unbelegt ist, z. B. über den Zeitslot CCA (Clear Channel Assessment) hinweg und verwendet dann nach dem Zeitslot CCA die unbelegte Ressource für die eigene Sendung eines Relaypakets von N₂ für die Verbindung BS-N₁. Hierbei ist 18brcca die Messzeit, während der mit dem Bezugszeichen 18bru markierte Bereich das Aussenden des Relaypakets von N₃ für die Verbindung BS-N₁ ist beziehungsweise das Aussenden des Relaypakets von N₂ für die Verbindung BS-N₂.

Konnte ein Relayknoten in dem aktuellen Frame für eine Verbindung ein Relay-Paket vorbereiten, aber nicht in den zugewiesenen Ressourcen senden, so verwirft er das Paket zum Ende des aktuellen Frames.

Im Gegensatz zu dem im vorherigen Abschnitt beschriebenen Verfahren, werden in diesem Verfahren für dedizierte Relayknoten jeweils ein oder mehrere Ressourcenblöcke reserviert, die sie zur Wiederholung von Paketen einer beliebigen Verbindung nutzen können. Diese Reservierung signalisiert die Basisstation allen Funkknoten mit Vorlauf, d. h. in dem Beispiel vor Beginn des aktuellen Superframes (Superframe k). Innerhalb der jeden Relayknoten zugeordneten Ressourcen ist dieser Relayknoten der Primärnutzer. Andere Relayknoten oder auch die Quellknoten können auf diese Ressourcen nur als Sekundärnutzer zugreifen.

Das Relay-Knoten kann entweder die erste Verbindung aus seiner Link-Priorisierungsliste auswählen oder eine beliebige Verbindung von seiner Liste unter Betrachtung im vorherigen Ressourcen der Paketwiederholungsphase oder im aktuellen Ressource zuvor ausgesandte Relay-Pakete anderer Relayknoten.

Innerhalb der zugewiesenen Ressource sendet der Knoten, welcher der Primärnutzer ist, sein vorbereiteten Relay-Pakete mit Beginn des Ressourcenblocks aus. Alle anderen Relayknoten oder Quellknoten sind Sekundärnutzer und führen ein Listen-before-Transmit Verfahren durch, wie im vorherigen Verfahren erläutert. Erkennen sie einen Ressourcenblock als unbelegt, senden sie ein von ihnen ausgewählte Relay-Paket aus.

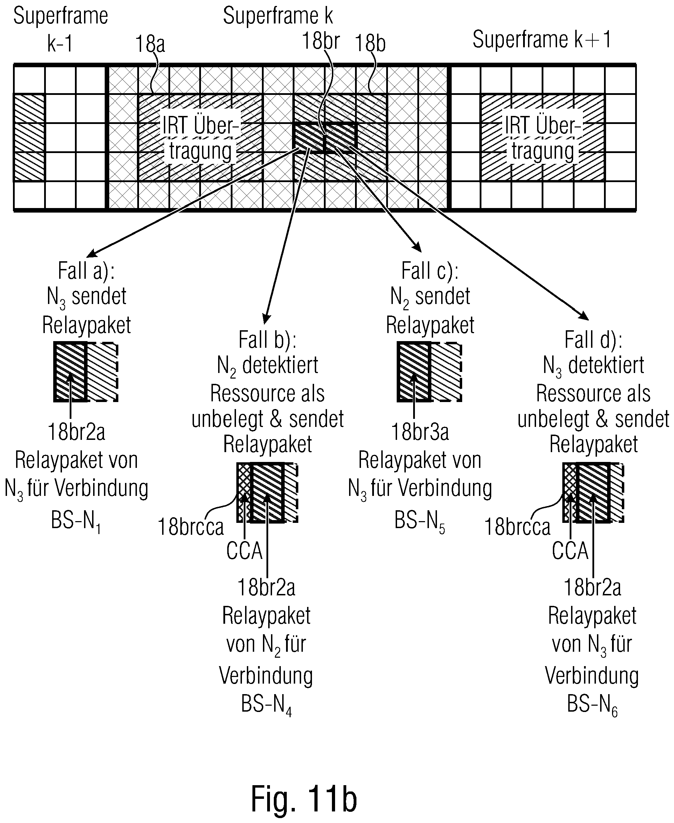

Bezugnehmend auf Fig. 11b wird nun ein erweitertes Ausführungsbeispiel erläutert. Bei Fig. 11b werden die reservierten Bereiche 18br2 und 18br3 nach entsprechender Messung 18br2ccabeziehungsweise 18br3cca verwendet (vgl. 18br2u und 18br3u).

Der erste Ressourcenblock für Paketwiederholungen ist dem Relayknoten N3 zugewiesen. In Fall a) konnte N3 das Relay-Paket für die Verbindung BS - N1 vorbereiten und sendet es zu Beginn des Ressourcenblocks aus. In Fall b) konnte N3 kein Relay-Paket vorbereiten und lässt die Ressource unbelegt. Relayknoten N2 führt zu Beginn des Ressourcenblocks eine CCA-Messung durch, erkennt die Ressource als unbelegt und sendet ein Relay-Paket für eine von ihm ausgewählte Verbindung (im Beispiel für die Verbindung BS - N4). Analog ergeben sich die Fälle c) und d), bei denen D3 der Primärnutzer des markierten Ressourcenblocks ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein erfindungsgemäß kodierte Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerpergrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nicht-vorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vor-richtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Kommunikationsnetzwerk (10) mit folgenden Merkmalen:
einer Basisstation (12);
mehreren Knoten (14, 16, 17) umfassend zumindest einen ersten und einen zweiten Knoten (14, 16, 17), wobei ein oder mehrere Knoten (14, 16, 17) als Relayknoten zwischen der Basisstation (12) und einem der mehreren Knoten (14, 16, 17) oder zwischen zwei der mehreren Knoten (14, 16, 17) einsetzbar sind,
wobei für die Datenübermittlung von Basisstation (12) an den ersten Knoten (14, 16, 17) oder von dem ersten Knoten (14, 16, 17) an die Basisstation (12) ein Superframe verwendet wird, wobei das Superframe einen ersten (18a) und einen zweiten Bereich (18b) aufweist,
wobei der erste Bereich zur Übertragung von einem oder mehreren Datenpaketen oder zur Übertragung von einem oder mehreren Datenpaketen im Downlink (DL) oder zur Übertragung von einem oder mehreren Datenpaketen im Uplink (UL) dient und wobei der zweite Bereich (18b) zur Wiederholübertragung oder Weiterleitungsübertragung dient.

2. Kommunikationsnetzwerk (10) gemäß Anspruch 1, wobei der zweite Knoten (14, 16, 17) als Relayknoten das Paket (in dem ersten Bereich (18a) empfängt, und ausgebildet ist, um das Datenpaket aus dem ersten Bereich (18a) zu extrahieren und das Datenpaket in dem zweiten Bereich (18b) des Superframes (18) an die Basisstation (12) oder den ersten Knoten (14, 16, 17) zu senden.

3. Kommunikationsnetzwerk (10) gemäß einem der Ansprüche 1 oder 2, wobei der zweite Knoten (14, 16, 17) ausgebildet ist, das Downlinkpaket von der Basisstation (12) zu dem ersten Knoten (14, 16, 17) und das Uplinkpaket von dem ersten Knoten (14, 16, 17) zu der Basisstation (12) in einem gemeinsamen Relay-Paket zu verbinden und/oder durch bitweise XOR-Operation zu verbinden; oder
wobei der zweite Knoten (14, 16, 17) ausgebildet ist, das Downlinkpaket von der Basisstation (12) zu dem ersten Knoten (14, 16, 17) und das Uplinkpaket von dem ersten Knoten (14, 16, 17) zu der Basisstation (12) in einem gemeinsamen Relay-Paket zu verbinden und/oder durch bitweise XOR-Operation zu verbinden, und wobei das Verbinden durch ein Flag signalisiert wird; und/oder
wobei der zweite Knoten (14, 16, 17) ausgebildet ist, das Relay-Paket an zwei Knoten (14, 16, 17) zu adressieren.

4. Kommunikationsnetzwerk (10) gemäß einem der Ansprüche 1 bis 3, wobei die Basisstation (12) und/oder der erste Knoten (14, 16, 17) eine Information bezüglich eines Übertragungsfehlers, einer erfolgreichen Übertragung, ein ACK-Signal oder ein NACK-Signal an den zweiten Knoten (14, 16, 17) übermittelt und/oder wobei die Information, das ACK-Signal oder das NACK-Signal Teil des Superframes (18) oder des vorherigen Superframes (18) sind; und/oder wobei das ACK-Signal oder das NACK-Signal in Paketen in einem ersten Bereich (18a) des Superframes (18) mitübertragen wird.

5. Kommunikationsnetzwerk (10) gemäß einem der Ansprüche 1 bis 4, wobei der zweite Bereich reserviert ist für die Wiederholübertragung und Weiterleitungsübertragung zwischen der Basisstation (12) und dem ersten Knoten (14, 16, 17) oder dem ersten Knoten (14, 16, 17) und der Basisstation (12); und/oder
wobei der zweite Bereich einen ersten reservierten Block (18br, 18br2, 18br3, 18ad, 18au) und einen zweiten reservierten Block (18br, 18br2, 18br3, 18ad, 18au) aufweist, wobei der erste reservierte Block (18br, 18br2, 18br3, 18ad, 18au) für die Wiederholübertragung oder Weiterleitungsübertragung von einem Downlinkpaket der Basisstation (12) an den ersten Knoten (14, 16, 17) vorgesehen ist und/oder wobei der zweite reservierte Block (18br, 18br2, 18br3, 18ad, 18au) für die Wiederholübertragung oder Weiterleitungsübertragung eines Uplinkpakets von dem ersten Knoten (14, 16, 17) zu der Basisstation (12) vorgesehen ist.

6. Kommunikationsnetzwerk (10) gemäß Anspruch 5, wobei der zweite Bereich oder ein oder mehrere Blöcke des zweiten Bereichs durch die Basisstation (12) oder eine Steuerung reserviert sind.

7. Kommunikationsnetzwerk (10) gemäß einem der Ansprüche 1 bis 6, wobei eine Zuordnung des zweiten Bereichs zu zumindest einem von mehreren Relayknoten erfolgt, wobei die Zuordnung anhand einer Verbindungsqualität des ersten Knotens (14, 16, 17) oder einer Relayverbindungsqualität erfolgt.

8. Kommunikationsnetzwerk (10) gemäß einem der Ansprüche 1 bis 7, wobei der zweite Knoten (14, 16, 17) das Datenpaket in unveränderter oder in modifizierter Form weiterleitet.

9. Kommunikationsnetzwerk (10) gemäß einem der Ansprüche 1 bis 8, wobei der erste und der zweite Knoten (14, 16, 17) als Paar definiert werden, wobei der erste Knoten (14, 16, 17) ein Uplinkpaket oder ein Downlinkpaket des zweiten Knoten (14, 16, 17) weiterleitet und der zweite Knoten (14, 16, 17) ein Uplinkpaket oder ein Downlinkpaket des ersten Knoten (14, 16, 17) weiterleitet; und/oder
wobei der zweite Bereich des Superframes (18) für den zu einem Paar gruppierten ersten und zweiten Knoten (14, 16, 17) reserviert ist.

10. Kommunikationsnetzwerk (10) gemäß Anspruch 9, wobei der zweite Bereich unterteilt ist in einen Block für die Uplinkpaketwiederholung und einen Block (18br, 18br2, 18br3, 18ad, 18au) für die Downlinkpaketwiederholung.

11. Kommunikationsnetzwerk (10) gemäß Anspruch 9 oder 10, wobei der erste und der zweite Knoten (14, 16, 17) ein jeweils für den anderen Knoten (14, 16, 17) adressiertes Downlinkpaket oder Uplinkpaket in dem zweiten Bereich (18b) sendet, wenn ein für den jeweiligen Knoten (14, 16, 17) adressiertes Downlinkpaket und/oder Uplinkpaket korrekt empfangen wurde; oder
wobei der erste und der zweite Knoten ein jeweils für den anderen Knoten (14, 16, 17) adressiertes Downlinkpaket in dem zweiten Bereich (18b) in einen Block (18br, 18br2, 18br3, 18ad, 18au) für das Downlinkpaket sendet, wenn ein für den jeweiligen Knoten (14, 16, 17) adressiertes Downlinkpaket und/oder Uplinkpaket korrekt empfangen wurde, und/oder wobei der erste und der zweite Knoten (14, 16, 17) ein jeweils für den anderen Knoten (14, 16, 17) adressiertes Uplinkpaket in dem zweiten Bereich (18b) in einen Block (18br, 18br2, 18br3, 18ad, 18au) für das Uplinkpaket sendet, wenn ein für den jeweiligen Knoten (14, 16, 17) adressiertes Downlinkpaket und/oder Uplinkpaket korrekt empfangen wurde.

12. Kommunikationsnetzwerk (10) gemäß einem der Ansprüche 1 bis 11, wobei in dem Kommunikationsnetzwerk (10) ein dritter und/oder ein weiterer Knoten (14, 16, 17) als Relayknoten verwendet wird; und wobei eine Kommunikationsverbindung zwischen der Basisstation und dem ersten Knoten (14, 16, 17) in selektiver Weise über den dritten oder weiteren Knoten (14, 16, 17) erfolgt.

13. Kommunikationsnetzwerk (10) gemäß Anspruch 12, wobei das Kommunikationsnetzwerk (10) eine Steuerung aufweist, die ausgebildet ist, um eine Relayverbindungsqualität für die Verbindung zwischen der Basisstation und dem ersten Knoten (14, 16, 17) über den dritten als Relayknoten verwendeten Knoten (14, 16, 17) sowie eine Relayverbindungsqualität für eine Verbindung zwischen der Basisstation (12) und dem ersten Knoten (14, 16, 17) über den weiteren als Relayknoten verwendeten Knoten (14, 16, 17) zu ermitteln,
und um in Abhängigkeit der jeweiligen Relayverbindungsqualität den dritten oder vierten Knoten (14, 16, 17) auszuwählen.

14. Kommunikationsnetzwerk (10) gemäß Anspruch 12 oder 13, wobei der dritte Knoten (14, 16, 17) eine Verbindung mit der Basisstation (12) über einen Relayknoten aufbaut und wobei eine Priorisierung der Verbindung zwischen der Basisstation (12) und dem ersten Knoten (14, 16, 17) oder der Basisstation (12) und dem dritten Knoten (14, 16, 17) erfolgt; und/oder
wobei in Abhängigkeit der Priorisierung, der zweite Bereich des Superframes (18) belegbar ist.

15. Kommunikationsnetzwerk (10) gemäß Anspruch 14, wobei jeder Block (18br, 18br2, 18br3, 18ad, 18au) des zweiten Bereichs in Teilbereiche unterteilt ist und die unterteilten Teilbereiche entsprechend der Priorisierung belegt werden; und/oder
wobei der erste Teilbereich jedes Blocks (18br, 18br2, 18br3, 18ad, 18au) des zweiten Bereichs (18b) für die höchst priorisierte Verbindung verwendet wird.

16. Kommunikationsnetzwerk (10) gemäß Anspruch 14 oder 15, wobei mittels eines LBT-Algorithmus eine Belegungserkennung der Ressourcen des zweiten Bereichs (18b) oder der Teilbereiche der Ressourcen des zweiten Bereichs erfolgt; und/oder
wobei ein zweiter Teilbereich jedes Blocks (18br, 18br2, 18br3, 18ad, 18au) des zweiten Bereichs (18b) verwendet wird, wenn durch die Basisstation (12) oder einen der Knoten (14, 16, 17) zugeordnet zu einer niedriger priorisierten Verbindung oder eine Steuerung erkannt wird, dass für eine gewisse Zeit die Ressourcen des ersten Teilbereichs unbenutzt sind.

17. Kommunikationsnetzwerk (10) gemäß einem der Ansprüche 13 bis 16, wobei eine Steuerung mittels einer Ressourcenzuweisung für den zweiten Bereich (18b) zu den Knoten (14, 16, 17) und/oder der Basisstation (12) eine Priorisierung vorgibt.

18. Kommunikationsnetzwerk (10) gemäß Anspruch 17, wobei eine dedizierte Ressourcenzuweisung oder eine beliebige Ressourcenzuweisung erfolgt.

19. Relayknoten eines Kommunikationsnetzwerk (10) mit einer Basisstation (12); und
mehreren Knoten (14, 16, 17) umfassend zumindest einen ersten und einen zweiten Knoten (14, 16, 17), wobei ein oder mehrere Knoten (14, 16, 17) als der Relayknoten zwischen der Basisstation (12) und einem der mehreren Knoten (14, 16, 17) oder zwischen zwei der mehreren Knoten (14, 16, 17) eingesetzt ist,
wobei für die Übermittlung von Basisstation (12) an den ersten Knoten (14, 16, 17) oder von dem ersten Knoten (14, 16, 17) an die Basisstation (12) ein Superframe verwendet wird, wobei das Superframe einen ersten (18a) und einen zweiten Bereich (18b) aufweist,
wobei der erste Bereich zur Übertragung von einem oder mehreren Datenpaket oder zur Übertragung von einem oder mehreren Datenpaketen im Downlink (DL) oder zur Übertragung von einem oder mehreren Datenpaketen im Uplinkpaket dient und wobei der zweite Bereich (18b) zur Wiederholübertragung oder Weiterleitungsübertragung dient;
wobei der Relayknoten ausgebildet ist, ein Datenpaket aus dem ersten Bereich zu extrahieren und in dem zweiten Bereich weiterzuleiten.

20. Verfahren (100) zum Betreiben eines Kommunikationsnetzwerks (10) mit einer Basisstation (12) und mehreren Knoten (14, 16, 17) umfassend zumindest einen ersten und einen zweiten Knoten (14, 16, 17) sowie zumindest einen Knoten (14, 16, 17), der als Relayknoten zwischen der Basisstation (12) und einem der mehreren Knoten (14, 16, 17) oder zwischen zwei der mehreren Knoten (14, 16, 17) einsetzbar ist, folgenden Schritten:
Übermittelung (105) eines Paketes (18) von der Basisstation (12) an den ersten Knoten (14, 16, 17) oder von dem ersten Knoten (14, 16, 17) an die Basisstation (12) innerhalb eines Superframes, wobei das Superframe (18) einen ersten (18a) und einen zweiten Bereich (18b) aufweist,
wobei der erste Bereich zur Übertragung von einem oder mehreren Datenpaket oder zur Übertragung von einem oder mehreren Datenpaketen im Downlink (DL) oder zur Übertragung von einem oder mehreren Datenpaketen im Uplinkpaket dient und wobei der zweite Bereich zur Wiederholübertragung oder Weiterleitungsübertragung dient.

21. Verfahren (100) nach Anspruch 20, wobei in dem Kommunikationsnetzwerk (10) ein dritter und/oder ein weiterer Knoten als Relayknoten verwendet wird; und wobei eine Kommunikationsverbindung zwischen der Basisstation (12) und dem ersten Knoten (14, 16, 17) in selektiver Weise über den dritten oder weiteren Knoten (14, 16, 17) erfolgt.

22. Verfahren (100) gemäß Anspruch 20 oder 21, wobei der erste und der zweite Knoten (14, 16, 17) denselben zweiten Bereich für eine Wiederholübertragung und/oder Weiterleitungsübertragung verwenden.

23. Computerprogramm mit einem Programmcode zur Durchführung des Verfahrens (100) nach Anspruch 20, 21 oder 22, wenn das Programm auf einem Computer abläuft.
